# EUROPEAN PATENT SPECIFICATION

(11) **EP 1 171 862 B1**
(45) Date of publication and mention of the grant of the patent: **17.09.2003**
(21) Application number: 00909856.7
(22) Date of filing: 16.02.2000
(51) Int. Cl.: G09F 19/18, G06F 17/30

(54) **DIGITAL INFORMATION SYSTEM**
DIGITALES INFORMATIONSSYSTEM
SYSTEME D'INFORMATION NUMERIQUE

(30) Priority: 23.02.1999 SE 9900637
(43) Date of publication of application: 16.01.2002
(73) Proprietor: INFOSCREEN Gesellschaft für Stadtinformationsanlagen mbH, 81379 München (DE)
(72) Inventor: JONASON, Joakim, S-746 93 Balsta (SE); DAHLGREN, Mats, S-254 38 Helsingborg (SE); HYLIN, Mats, S-182 35 Danderyd (SE)
(74) Representative: Gesthuysen, von Rohr & Eggert
(86) International application number: PCT/SE00/00303
(87) International publication number: WO 00/051102

(56) References cited:
- WO-A1-92/12508
- WO-A1-97/41546
- WO-A1-99/40558
- WO-A2-93/16459

## Description

### TECHNICAL FIELD

The present invention relates to a method and to an arrangement of assigning an information-category and a priority of exposure for spots or blocks of information for controlling and coordinating projectors in a digital information system for displaying information on at least one display device through the medium of at least one projector for each said device, said information being displayed in places that are accessible to and/or frequented by a general public. In one particular aspect, the invention is applied to control projectors for displaying information directed towards people in such places as main railway stations, subway stations, airport waiting lounges, cinemas, private homes etc.

### DESCRIPTION OF THE BACKGROUND ART

From the Swedish patent publication SE-C2-507 473 and from the international publication WO 97/41546, both by the same applicants as for the present invention, a flexible system is known in which external information mediators are able to dynamically control in real time the transmission of display instructions to a larger public in different places situated at any chosen distance apart through projectors which project information onto displays intended herefor.

One object of the known system is to enable pictures, images, messages and announcements to be configured in accordance with modern digital technology, therewith providing rapid communication. A further object of it is to enable a picture, image or other information to be changed in practice as often as is desired, in real time, therewith providing direct and immediate communication, and to enable similar or specific information to be displayed in places that are mutually far apart and to enable message information to be alternated with advertising spots, for instance.

According to one aspect, the known system relates to a method of coordinating and controlling projectors in a digital information system for displaying information on a display device through the medium of a projector, whereby the information being displayed in places that are generally available to and frequented by a general public.

Information display subscribers are connected to a computerized control centre via computer and telecommunication interfaces for all-day-round transmission of information. The control centre has a communication interface against computerized devices situated in connection with said places for projector coordination and control.

The control centre is able to create and update a display/play/exposure list in real time with control instruction fields via booking information for display dynamically in time from mediators having drive routine means which are connected to the subscription and which are transparent for the transmission of information to the drive routine means of the control centre for transmission of information in the system.

A display list includes control instructions, which coordinate and control the projectors concerned with regard to what shall be displayed, when it shall be displayed, where it shall be displayed and for how long it shall be displayed, and causes projectors, independently of other projectors, to receive the same or different information for display in accordance with the display list.

An administrator of the digital information system is able to update the display list with desired information at any time whatsoever, wherein the dynamic booking can be changed or delayed.

The projector may also interrupt display of information when the allocated display devices, or the projector, is/are visually obstructed in said public place

In one embodiment, the exposure list may include reserved instruction fields for updating with control instructions via the mediator interface, wherein the control instructions can be placed in a waiting line, or queue, when the exposure list lacks instruction updating fields at that moment in time.

The known system also relates to an arrangement of apparatus for carrying out the aforesaid method, said apparatus including the aforesaid devices and an exposure handler which creates the exposure list.

Prior art, prior to the Swedish patent publication SE-C2-507 473 and the international publication WO 97/41546, did not consider or propose the use of a display or play or exposure list. Hence such prior art displays blocks of different information which, for example, are of the length of 1 hour which are in principal repeated each hour. If new information is to be displayed the block of information has to be revised, which can be accomplished in many different ways, no one of them sufficiently disclosed through prior art. Those prior art systems are very time consuming in introducing new blocks of information and do not at all have the inherit dynamic introduced by a display list for a possible 24-hour cyclic display at various time periods. Also, such a display list makes it impossible to repeatedly re-transmit blocks of information.

A drawback and problem related to the known system described in said patent and application respectively, is that the play list is unevenly used for displaying ordered spots/blocks of information from mediators. If for example a projector interrupts display of information when the allocated display devices, or the projector, is/are visually obstructed in said public place, information, for example by an incoming train, spots/blocks of that piece of information should be displayed at another suitable time period according to the display/play/exposure list. This is not an easy task to accomplish in order to implement fairness and other parameters controlling the willingness of mediators to use a system like that.

There are more events to even out at, for example, a subway station such as failing projectors/cameras/digital displays, emergency messages shown on displays, time table displays etc.

Therefore effective methods or schemes and arrangements are needed to solve problems related to the above.

### SUMMARY OF THE DISCLOSED INVENTION

It is an aspect of the present invention to solve problems related to assigning an information-category and a priority of exposure for spots or blocks of information for controlling and coordinating projectors in a digital information system controlled or partly controlled by a display or play or exposure list or the like in accordance with attached independent claims and embodiments of the present invention as set forth through attached dependent claims.

In order to accomplish the aforesaid the present invention sets forth a method of assigning an information-category and a priority of exposure for spots or blocks of information in a digital information system. The method comprising coordinating and controlling of projectors for exposing information on at least one display device through the medium of at least one projector, wherein the information is displayed in places accessible to and frequented by a general public or on television. Subscribing information mediators are connected to a computerized control centre via interfaces for data and telecommunication for round-the clock transmission of information. The control centre has communication interfaces against computerized devices situated in connection with said places for coordinating and controlling projectors/cameras/digital displays. Said control centre is able to create and update an exposure list in real time with control instruction fields via dynamic booking of information in time for exposure from mediators.

Mediators having drive routine means connected to the subscription, which may be transparent for transmission of information with the drive routine means of the control centre for transmission of information in the system via interfaces. The exposure list with control instructions coordinates and controls the projectors with regard to what shall be exposed, when it shall be exposed, where it shall be exposed and for how long it shall be exposed, and enables each projector to be controlled. This can be achieved independently of the other projectors, to receive the same or different information in accordance with the exposure list for exposure of respective projectors through the computerized devices.

It is accomplished by determining how many times an information is to be exposed during a specific time period, e.g. one day, a week etc., for example, when booked, whereby single spots or blocks of information are assigned a specific information-category and a priority for exposure. The priority decrements a specific unit of priority for each exposure, displaying said information according to assigned priority, thus exposure interruption due to visual inaccessibility for information viewers is evened out during said specific time period for single spot or block information.

An embodiment of the present invention provides an exposure list divided into a plurality of time slots. Each time slot can belong to a specific category of information.

One embodiment of the present invention comprises that information assigned a specific information-category is exposed with at least one different information-category between themselves. Said specific information category can be given a specific code of placement in the exposure list.

Yet another embodiment includes that priority is equal for every new information entry into the system.

A further embodiment includes that priority decrements with the priority figure divided with all the entries of a specific information spot or block preferably rounded or truncated if the division is an infinite decimal figure.

A still further embodiment comprises that said single information spot or block with the highest priority level is exposed, and that information spots or blocks which priority has reached the level of no priority left are abandoned from exposure.

Another embodiment comprises that information spots or blocks are exposed in series if they have the same priority.

Yet another embodiment includes information spots or blocks having higher priority than zero or the like and the same information-category, a system choice information is played between each information of the same category.

In addition the present invention comprises an arrangement for the assigning of an information-category and a priority of exposure exposure for spots or blocks of information in a digital information system in accordance with the above described system further comprising:
determining means determining how many times an information is to be exposed during a specific time period when booked;
category assigning means, whereby single spots or blocks of information are assigned a specific information-category;
priority assigning means for priority of exposure for an information;
computing means for decrement of priority a specific unit of priority for each exposure, displaying said information according to assigned priority; and
thus enabling that exposure interruption due to visual inaccessibility for information viewers is evened out during said specific time period for a single spot or block of information.

Information assigned a specific information-category in one embodiment is exposed through the system with at least one different information-category between themselves.

Said specific information category is given a specific code of placement in the exposure list by said category assigning means in one embodiment.

The priority is equal for every new information entry into the system in one embodiment.

In one embodiment the priority decrements with the priority figure divided with all the entries of a specific information spot or block preferably truncated if the division is an infinite decimal figure through said computing means.

An embodiment of the present invention provides an exposure list divided into a plurality of time slots. Each time slot can belong to a specific category of information.

A single information spot or block with the highest priority level is exposed, and information spots or blocks which priority has reached a level of no priority left are abandoned from exposure by the system in another embodiment of the invention.

Information spots or blocks are exposed in series by the system if they have the same priority in one embodiment of the arrangement.

In yet another embodiment, said information spots or blocks having higher priority than zero or the like and the same information-category, a system choice information is exposed by the system between each information of the same category.

### BRIEF DESCRIPTION OF THE DRAWINGS

The following description makes reference to the text in the accompanying drawings to provide a better understanding of the embodiments of the present invention, whereby:

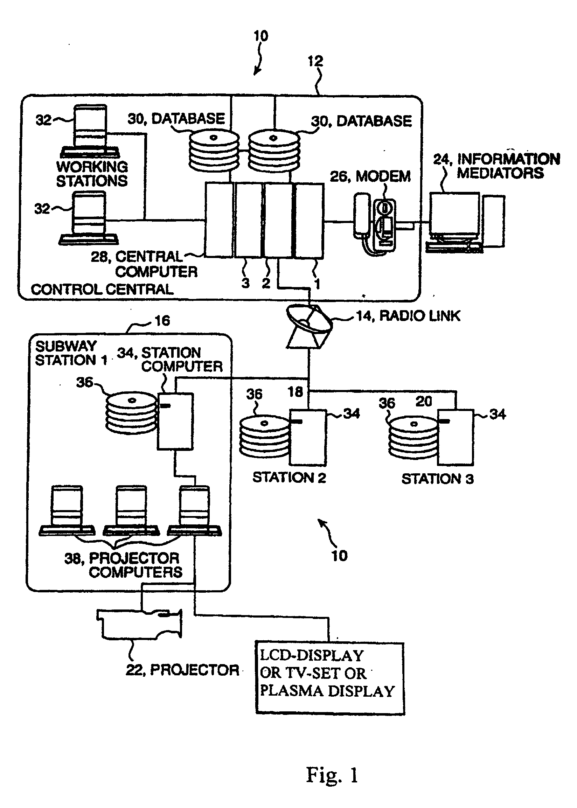

**Fig. 1** schematically illustrating a prior art system for coordinating and controlling projectors in a digital information system for displaying information in accordance with the invention.

### TABLE

The attached table is schematically illustrating a display list implemented through the method of the present invention.

### DETAILED DESCRIPTION OF PREFERRED EMBODIMENTS OF THE INVENTION

The present invention relates to a method of assigning an information-category and a priority of exposure for spots or blocks of information for the dynamic coordination and control of projectors in a digital information system for displaying information on at least one display device via at least one projector for each display device, wherein the information is displayed in places that are accessible to and frequented by a general public. The invention also relates to an arrangement of apparatus for carrying out the method.

From the Swedish patent publication SE-C2-507 473 and from the international publication WO 97/41546, both by the same applicants as for the present invention, such a dynamic system is known.

The present invention describes and claims how to make use of a display/play/exposure list according to a dynamic system in order to overcome disadvantages related to unexposed information spots or blocks in the list.

Prior art, prior to the Swedish patent publication SE-C2-507 473 and the international publication WO 97/41546, did not consider or propose the use of a display or play or exposure list. Hence such prior art displays blocks of different information which, for example, are of the length of 1 hour which are in principal repeated each hour. If new information is to be displayed the block of information has to be revised, which can be accomplished in many different ways, no one of them sufficiently disclosed through prior art. Those prior art systems are very time consuming in introducing new blocks of information and do not at all have the inherit dynamic introduced by a display list for a possible 24-hour cyclic display at various time periods. Also, the display list makes it impossible to repeatedly re-transmit blocks of information.

It is to be understood that a projector/camera itself can be a digital display device or incorporated in a digital display device such as an LCD-display or a plasma display device, a digital television set etc.

Although implementation of embodiments are limited in the following to subway railway stations, it will be understood that the invention is not restricted to these embodiments. As before mentioned, the inventive system can be used in places where large sections of the public are known to visit or look at advertisement, such as railway stations, airports, outdoor locations, cinemas, in homes looking at television etc., in addition to subway stations.

Preferred embodiments of the invention will now be described in detail with reference to the accompanying drawings, where Fig. 1 schematically illustrates a prior art system 10, as disclosed through patent publication SE-C2-507 473 and the international publication WO 97/41546, for coordinating and controlling projectors in a digital information system for displaying information on display devices, such as free-standing picture screens, wall-mounted screens, walls, and overhead screens or other means suitable for reproducing or exposing picture information in the form of text, stills, movable pictures, images, etc. (displays not shown in the drawing).

In the main, the system is comprised of a control centre 12 having a communication interface 14 which connects an unlimited number of computerized devices 16, 18, 20 which are placed at desired distances from one another for the control of projectors 22, or as mentioned other projectors such as LCD-display, TV-set 40 etc., whose projector images or pictures are displayed in the aforesaid public places.

Hence, in other embodiments of the devices included in the computerized devices 16, 18, 20, the projector 22 is replaced with an electronic display (not shown), such as a large picture screen in LCD technology, light-emitting diode technology (LED technology) or the like. The station computer 34 is then included in the large picture screen or is connected externally thereto. Preferably, the projector computers 38 in the station computer 34 and the database 36 are also included. Information is transmitted from the control centre 12 generally in the same manner as that before described. However, each separate large picture screen may be addressed directly through a radio network 14, wherein the screens are controlled from the control centre 12 which includes redundancy. Thus, in the illustrated case, the computerized devices 16, 18, 20 form an electronic display with control computer 34, said projector 22 effecting the display.

The illustrated system also includes an advertising agency, which is connected to the control centre 12 through the medium of a computer 24 and a modem 26 or the like. Although only one modem is shown connected to the central computer 28 of the control centre, it will be understood that modem poles, telephone switching centres and other similar devices may be used to this end in accordance with present-day techniques. The advertising agency can also be a company for digital reproduction (repro) of information to be inserted in an exposure list according to prior art. Alternatively control central 10 working stations 32 are booth internal and/or external thus the external workingstation(s) 32 make up or belong to said repro company. Hence information mediators 24 can order their information to be inserted by a external repro company.

The central computer 28 in the control centre 12 also includes databases 30, in the illustrated case two databases. The databases 30 may be externally connected to the central computer. The control centre also includes working stations 32, which are preferably connected to the central computer 28 via a Local Area Network (LAN) in accordance with known techniques. The working stations 32 are used by the personnel serving the control centre 12, in monitoring, checking, maintaining and updating functions in the central computer with its databases. The control centre administrator is able to insert projector control instructions via the working stations, for instance when information is directed specifically to travellers and passengers travelling by ship, train, subway, aircraft or some other vehicular traffic who require specific information. The information may concern the arrival times and departure times of passenger-carrying vehicles. The administrator controls internally how, what, when or where the information shall be displayed by the projectors 22. An important feature in this context, however, is that external information mediators 24 are able to give control instructions to the projectors 22 with regard to the information that the external mediators 24 desire the system 10 to display via the projectors 22, each on its own initiative and communication-wise transparent via modems 26. This can be achieved in accordance with one embodiment of the prior art invention without involving the working stations 32 in the procedure of transmitting the control instructions to the central computer 28.

The term information mediator 24 used in the following shall be interpreted in its widest meaning, i.e. as not only referring to advertising agencies but to all companies and private persons who wish to utilize the system 10 for commercial reasons or for the display of information that concerns a general public. At present a mediator which wishes to display information in public places is normally forced to wait about two weeks, perhaps longer, before his order can be implemented and the information publicly displayed. With the inventive digital information system 10, the information can be displayed principly in real time, i.e. at the time of making the order, possibly with a short delay due to processing, fully-booked exposure lists and other quickly passing causes. Furthermore, an external information mediator 24 is able to put through information to the system 12 twenty-four hours a day, whereupon the information can be included instantaneously in an exposure list, as illustrated in more detail below.

Those external information mediators which connect to the control centre 12 via modems are, in one embodiment of the invention, connected to the control centre via specially designed interfaces (drive routine means) for data and telecommunication. In this way, only external mediators 24 having the correct interface are able to connect transparently to the control centre 12 for delivering control instructions to the projectors 22, which avoids unauthorized access to the display of such information and misuse of the system. In this regard, the special interface, which may be included in the computers of external mediators, also includes commercially available code keys or other codes sent between the control centre 12 and the computer 24 of the external mediator to verify the right to enter control instructions into the central computer 28, without the administrator needing to supply through the working stations 32 further information or authority permitting access of the external information mediators 24 to the central computer for transmitting system transparent control instructions to the projectors 22.

In accordance with the prior art, the control centre 12 has a communication interface 14 against the computerized devices 16, 18, 20 situated on shifting positions or places for projector coordination and control.

The drawing shows specifically a radio link which forms an interface between the control centre 12 and the computerized devices 16, 18, 20, this interface being a preferred interface, although not necessarily the sole possible interface. Other interfaces for transmitting information between the control centre 12 and the computerized devices 16, 18, 20 may consist of a cable-carried ISDN solution (Integrated Services Digital Network) or other fixed lines that have like or better capacity.

The digital information system 10 has been described in the aforegoing with regard to respective hardware and interfaces. Implementation of the prior art invention in achieving its objects and purposes has been described in detail in the publications SE-C2-507 473 and WO 97/41546 mentioned above.

Henceforth the present invention will be described through a prior art exposure list which covers a twenty-four hour period for information exposure or display via projectors 22. The exposure handler 3 collects and processes, i.e. allocates, information relating to projector control instructions, wherein mediator information is sorted into the exposure list in accordance with the wishes of the mediator 24 or its instructions, when available space is found in the exposure list or in alternative places in the exposure list given by the mediator. If the exposure list is completely filled with instructions, the mediator instructions to the control centre remain in the queue list in the server 1 in readiness for later inclusion in the exposure list, in accordance with a preferred embodiment.

In one embodiment of the prior art, the exposure handler 3 creates or allocates a data message (data field) including a header, a control character field, an address field, optionally at least one CRC field (Cyclic Redundancy Code), and optionally status flags which identify and are connected to the information from an information mediator 24 and filed in the exposure list in the time interval that the information shall be exposed or displayed through a projector 22. This constitutes an alternative to the insertion of the entire information bit from an external mediator 24 in a specific time interval in the exposure list, and enables the provision of an exposure list that contains much less information and which is thus easier to handle, and to accelerate transmission of the list between computers and databases included in the system.

A data message in the exposure list can be understood here as being a control instruction in an instruction field for activating projectors 22 to project information.

A data message of this kind connected to each individual information exposure enables known HASH or switching methods to find information included in the exposure time intervals in the exposure list both effectively and quickly.

In one embodiment of the prior art, there is thus included an alternative to the dynamic updating of the exposure list as mentioned in the aforegoing, i.e. the external information mediators 24 which do not have access to software in the exposure handler are provided with the possibility of having their picture material or exposure material processed by personnel serving the working stations 32, wherein said personnel enter, via the working stations 32, the information that the external mediator 24 wishes to have exposed, or displayed, via projector control instructions in the exposure handler and via the exposure list created by the handler. Personnel at the working stations 32 are thus able to interrupt any queue lists in the server 1 to update the exposure list, via the exposure handler, with information generated centrally from the control centre 12 or with information that is insufficiently processed when received by the server 1 from the external information mediator 24.

In accordance with the aforegoing, external information mediators 24 that have access to the exposure program are able to deliver complete picture series/films which can be processed automatically and inserted into the exposure list, or optionally personnel administering the working stations 32 are able to pick external mediator information from the queues, or lines, and process this information so that it can be inserted into the exposure list via the exposure handler 3. In order to be able to distinguish information that must be processed via the working stations, external mediators 24 can mark or label such transmitted material with an appropriate code, so that the central computer 28 is able to identify this material and send it to working stations 32 for processing. Alternatively, e-mail is processed and registered as information which must be processed.

As mentioned, prior art, prior to the Swedish patent publication SE-C2-507 473 and the international publication WO 97/41546, did not consider or propose the use of a display or play or exposure list. Hence such prior art teaches displaying blocks of different information which, for example, are of the length of one hour which are in principal repeated each hour. If new information is to be displayed the block of information has to be revised, which can be accomplished in many different ways, non sufficiently or specifically disclosed through prior art. Those prior art systems are very time consuming in introducing new blocks of information and do not at all have the inherit dynamic introduced by a display list for a possible 24-hour display at various time periods. Also, the 24-hour display list makes it impossible to repeatedly re-transmit said, for example, 1 hour blocks of information.

Also, according to prior art, sensors may be placed in the close vicinity of projectors 22, such as to detect any obstacle that may prevent projectors 22 from displaying information on screens (not shown). These sensors are connected to projector computers 38, so as to enable said signals to be transmitted to the station computer 34. Alternatively, the sensors may be connected directly to station computers 34. The sensors are of a typical kind which detect the presence of obstacles, for instance optical sensors which detect when a light beam is broken, microphones, electromagnetic transmitters or ultrasonic transmitters having one or more receivers, etc.

When a sensor (not shown) registers the presence of an obstacle between a projector 22 and a cloth screen or some other display surface, the projector is stopped from projecting pictures during the time that the obstacle is present.

The sensor may also function to place a cover in front of the projector lens, so that dust, dirt or the like cannot come into contact with the lens or the display screen when the projector 22 is not a camera.

When the information mediator 24 is an advertising agency and the advertisements are to be displayed are in picture form, the advertising subscriber is able to buy a number of spots which are shown in the exposure list. The spots are shown, e.g., for a ten-second period, where, e.g., each sixth spot is a spot used by the transport company operating the subway, wherein this spot can be used partly for advertising purposes and partly for information purposes. The advertising subscriber may buy spots individually or in a special package, and the digital information system is able to insert a change at short notice or to operate a completely new spot. The system is thus highly flexible and enables quick changes to be made with regard to what shall be exposed on the exposure means, where it shall be exposed and when.

Computer-produced pictures or exposures are delivered by external advertising agencies/newspaper agencies, etc., for exposure, or showing, in subways for instance. The pictures are received by a control centre 12, which includes information material storage media. The control centre also decides what shall be exposed and in which order, and distributes the information material to the subway station 16, 18, 20. The control centre 12 is also able to refrain from displaying information which conflicts with "good order" or accepted morale and of a disturbing nature to the large majority of the public, possibly through the medium of working stations 32 and via control routines. The display of such information can also be prevented through the medium of the contracts signed by external information mediators 24 when obtaining an account or a subscription.

Those screens that are obstructed, e.g., by incoming subway trains, shall be "extinguished" during the time the train is located in the station. Synchronization in this regard is controlled by the station computer 34. This enables screens that are not obstructed to continue to receive exposure information from projectors 22.

The projector computer 38 informs the station computer 34 of the projector address, picture number/name, exposure duration and the time of the exposure, through the medium of function control means in said station computer. In the event of a malfunction/mains failure or a power cut, the station computer 34 reports this occurrence to the control centre 12. The central computer 28, in turn, monitors the station computers 34 at regular intervals.

The information material to be exposed, or shown, is down-loaded from the control centre 12 to the station computers 34. Because each projector 22 has its own projector computer 34, information material can be sent to the station computer 34 at any time in a calendar day without disturbing exposure on the station 16, 18, 20. When necessary, the exposure list can be changed or stopped in respect of all projectors 22 or in respect of certain projectors for showing specifically chosen information.

The computers 34 include counters which function to register, e.g. in tables or other registers, the length of time over which the information concerning each external information mediator 24 has been exposed, or shown. Thus, when so considered by an administrator, the mediator 24 need only pay for the actual time over which the information was displayed and is not required to pay a single down payment for, e.g., round-the-clock display over a seven-day period, as is at present the case.

A drive routine means which interrupts the showing of exposures when the exposure means is hidden from the projector 22, or vice versa, can also be used as feedback and monitoring in statistical analyses of the subway administrator in the present invention as to whether or not trains are running in accordance with the timetable, this being of interest for drawing up the exposure list and future updating of said list, among other things. This is effected by registration in the station computer 34 when a picture or exposure showing is interrupted. Registration may be effected, for instance, via interrupt routines for the computer 34. The registration may also trigger a clock (counter, timer) to register the time during which a vehicle obstructs the screen or the projector 22 respectively.

The attached Table depicts a schematic display/play/exposure list in order to explain and clarify some of the preferred embodiments of the present invention in greater detail.

The columns in the Table are marked up with the following headings: Time, Subject, Category, Priority and Expose, which should be fairly self explainable. Nevertheless, Expose is for how many times a certain subject should be exposed on a display. The schematic play list comprises three subjects: cartoon, commercial, and information (here administrator information).

Two commercial spots are of the same category namely cars 1 and cars 2 and should preferably not being displayed in series (directly after another). The advertisements or spot cars 1 and cars 2 shall be exposed 2,00 and 3,00 times respectively. Decimal figures are provided because of possible rounding or truncation when computing new priorities.

As can be seen from the Table the priority unit used for a new entry into the display list is 1,00. For simplicity, all of the entries around 18.00 hours are new ones thus being given priority 1,00. At 19.00 hours they are to be displayed once again. As can be seen the entries in the list have new priority figures, calculated out off 1,00-(Priority/Expose). Priority figures and priority calculations can of course be accomplished in various ways, this being a possible one.

It is seen in the Table that cars 1 spot has been forced to give up its display time 19.05 for display of for example administrator information, here time table information. Hence, cars 1 spot priority is not to be decrement. Instead the cars 1 spot takes the place of the cars 2 spot display in the 20.00 hour display because its priority 0,5 is now higher then the cars 2 priority 0,33.

It is preferable in one embodiment that the same categories of information are not to be displayed one after another, thus moderating the competition amongst for example two different car manufactures cars 1 and cars 2, and for other possible reasons.

In one embodiment of the play list every time period for displaying information spots can have a category assigned to it, for example, so that toothpaste commercials and other categories are shown at specific time periods controlled by the display list. Hereby hindering a display of for example three toothpaste commercials in a row.

As is obvious from the display list depicted in the Table, the single dots or star characters on the rows of column Time indicate a cyclic display list. But not meaning that displays are repeated cyclic every time a block of information has been displayed, if the 18.00-20.00 hours displays in the Table are considered as blocks. This also elucidates that there is a big difference between prior arts cyclic block displays and the display list introduced through publications SE-C2-507 473 and WO 97/41546.

Hence it is determined how many times an information is to be exposed through the control of the display list during a specific time period when booked, whereby single spots or blocks of information are assigned a specific information-category and a priority for exposure. The priority decrements a specific unit of priority for each exposure, thus exposure interruption due to visual inaccessibility for information viewers is evened out during said specific time period for single spot or block information.

A specific information category is given a specific code of placement in the exposure list in one embodiment of the invention.

It is common to arrange so that single information spots or blocks with the highest priority level are exposed, and that information spots or blocks which priority has reached the level of no priority left are abandoned for exposure.

It is also preferred that information spots or blocks having higher priority than zero or the like, and the same information-category are not brought to contest. Instead a system choice information is played between each information of the same category. It may be a cartoon or any other information decided by the system.

In addition the present invention also comprises an arrangement for the assigning of an information-category and a priority of exposure for spots or blocks of information in a digital information system in accordance with the above described system with a display list, and further comprising:
determining means determining how many times an information is to be exposed during a specific time period;
category assigning means, whereby single spots or blocks of information are assigned a specific information-category;
priority assigning means for priority of exposure for an information;
computing means for decrement of priority a specific unit of priority for each exposure, displaying said information according to assigned priority; and
thus enabling that exposure interruption due to visual inaccessibility for information viewers is evened out during said specific time period for a single spot or block of information.

Information assigned a specific information-category in one embodiment is exposed through the system with at least one different information-category between themselves.

Said specific information category is given a specific code of placement in the exposure list by said category assigning means in one embodiment.

It is well known to a person skilled in the art how to accomplish those means used in the arrangement described above. It is appreciated that such means are accomplished as software, hardware and/or firmware in the system described through publications SE-C2-507 473 and WO 97/41546.

It will be understood that the aforedescribed embodiments of the present invention are not intended to limit the scope of the invention, but are merely intended as preferred modes of carrying out the invention. The invention includes other embodiments apparent to the person skilled in this art from the scope of the following Claims.

**Table**

| **Time** | **Subject** | **Category** | **Priority** | **Expose** |
|---|---|---|---|---|
| * | - | - | - | - |
| * | - | - | - | - |
| * | - | - | - | - |
| 18.00 | Cartoon | Pleasure | 1,00 | 5,00 |
| 18.05 | Commercial | Cars 1 | 1.00 | 2,00 |
| 18.08 | Commercial | Toothpaste | 1,00 | 5,00 |
| 18.10 | Commercial | Cars 2 | 1,00 | 3,00 |
| * | - | - | - | - |
| * | - | - | - | - |
| * | - | - | - | - |
| 19.00 | Cartoon | Pleasure. | 0,80 | 5,00 |
| 19.05 | Information | Time Table | - | - |
| 19.08 | Commercial | Toothpaste | 0,80 | 5,00 |
| 19.10 | Commercial | Cars 2 | 0,67 | 3,00 |
| * | - | - | - | - |
| * | - | - | - | - |
| * | - | - | - | - |
| 20.00 | Cartoon | Pleasure | 0.60 | 5,00 |
| 20.05 | Information | Time Table | - | - |
| 20.08 | Commercial | Toothpaste | 0,60 | 5,00 |
| 20.10 | Commercial | Cars 1 | 0,50 | 2,00 |
| * | - | - | - | - |
| * | - | - | - | - |
| * | - | - | - | - |

## Claims

1. A method of assigning an information-category and a priority of exposure for spots or blocks of information in a digital information system (10) comprising interfaces for data and telecommunication (26) for round-the clock transmission of information at places accessible to and frequented by a general public including places where television sets are placed, wherein a control centre (12) has communication interfaces (14) for coordinating and controlling projectors (22), wherein the control centre (12) is able to create and update an exposure list in real time with control instruction fields via dynamic booking of information in time for exposure from mediators (24), wherein the exposure list with control instructions coordinates and controls the projectors (22) with regard to what shall be exposed, when it shall be exposed, where it shall be exposed and for how long it shall be exposed, and enables each projector (22) to be controlled, independently of the other projectors, to receive the same or different information in accordance with the exposure list for exposure of respective projectors (22), **characterized in that** it is determined how many times an information is to be exposed during a specific time period, whereby single spots or blocks of information are assigned a specific information-category and a priority for exposure, which priority is decremented by a specific unit of priority for each exposure, and displaying said information according to assigned priority, so that exposure interruption due to visual inaccessibility for information viewers is evened out during said specific time period for single spot or block information.

2. A method according to claim 1, **characterized in that** said exposure list is divided into a plurality of time slots.

3. A method according to claim 2, **characterized in that** each time slot belongs to a specific category of information.

4. A method according to claims 1-3, **characterized in that** information assigned a specific information-category is exposed with at least one different information-category.

5. A method according to claims 1-4, **characterized in that** said specific information category is given a specific code of placement in the exposure list.

6. A method according to claims 1-5, **characterized in that** said priority is equal for every new information entry into the system.

7. A method according to claims 1-6, **characterized in that** said priority is decremented by the priority figure divided by all the entries of a specific information spot or block preferably truncated if the division is an infinite decimal figure.

8. A method according to claims 1-7, **characterized in that** said single information spot or block with the highest priority level is exposed, and that information spots or blocks of which the priority has reached the level of zero priority are not exposed anymore.

9. A method according to claims 1-8, **characterized in that** said information spots or blocks are exposed in series if they have the same priority.

10. A method according to claims 1-9, **characterized in that** said information spots or blocks having priority higher than zero and the same information-category, a system choice information is played between each said information of the same category.

11. An arrangement for the assigning of an information-category and a priority of exposure comprising interfaces for data and telecommunication (26) for round-the clock transmission of information at places accessible to and frequented by a general public including places where television sets are placed, wherein a control centre (12) has communication interfaces (14) for coordinating and controlling projectors (22), wherein the control centre (12) is able to create and update an exposure list in real time with control instruction fields via dynamic booking of information in time for exposure from mediators (24), wherein the exposure list with control instructions coordinates and controls the projectors (22) with regard to what shall be exposed, when it shall be exposed, where it shall be exposed and for how long it shall be exposed, and enables each projector (22) to be controlled, independently of the other projectors, to receive the same or different information in accordance with the exposure list for exposure of respective projectors (22), **characterized in that** it comprises:
means which determine how many times an information is to be exposed during a specific time period when booked;
category assigning means, whereby single spots or blocks of information are assigned a specific information-category;
means for assigning priority of exposure for an information;
computing means for decrementing said priority by a specific unit of priority for each exposure; thus ensuring that exposure interruption due to visual inaccessibility for information viewers is evened out during said specific time period for each single spot or block of information.

12. An arrangement according to claim 11, **characterized in that** said exposure list is divided into a plurality of time slots.

13. An arrangement according to claim 12, **characterized in that** each time slot belongs to a specific category of information.

14. An arrangement according to claims 11-13, **characterized in that** information assigned a specific information-category is exposed through the system with at least one different information-category.

15. An arrangement according to claims 11-14, **characterized in that** said specific information category is given a specific code of placement in the exposure list by said category assigning means.

16. An arrangement according to claims 11-15, **characterized in that** said priority is equal for every new information entry into the system.

17. An arrangement according to claims 11-16, **characterized in that** said priority is decremented by the priority figure divided by all the entries of a specific information spot or block, preferably truncated if the division is an infinite decimal figure through said computing means.

18. An arrangement according to claims 11-17, **characterized in that** said single information spot or block with the highest priority level is exposed, and that information spots or blocks of which the priority has reached zero are not exposed by the system anymore.

19. An arrangement according to claims 11-18, **characterized in that** said information spots or blocks are exposed in series by the system if they have the same priority.

20. An arrangement according to claims 11-19, **characterized in that** said information spots or blocks having priority higher than zero and the same information-category, a system choice information is exposed by the system between each said information of the same category.

## Patentansprüche

1. Verfahren zur Zuweisung einer Informations-Kategorie und einer Priorität zur Ausstrahlung bzw. Darstellung von Spots oder Blöcken von Informationen in einem digitalen Informationssystem (10), welches Daten- und Telekommunikations-Schnittstellen (26) zur Rund-um-die-Uhr-Übertragung von Information an Orten aufweist, die der breiten Öffentlichkeit zugänglich sind und von ihr frequentiert werden, einschließlich solcher Orte, an denen Televisions-Anlagen angeordnet sind, wobei ein Steuerzentrum (12) Kommunikationsschnittstellen (14) zur Koordinierung und Steuerung von Projektoren (22) aufweist, wobei das Steuerzentrum (12) in der Lage ist, eine Ausstrahlungsliste in Echtzeit mit Steuerbefehlsfeldern über dynamisches Buchen von Information von Vermittlern (24) rechtzeitig zur Ausstrahlung zu erzeugen und zu aktualisieren, wobei die Ausstrahlungsliste mit Steuerbefehlen die Projektoren (22) koordiniert und steuert in Bezug auf das, was ausgestrahlt werden soll, wann es ausgestrahlt werden soll, wo es ausgestrahlt werden soll und für wie lange es ausgestrahlt werden soll, und jeden Projektor (22) befähigt, unabhängig von den anderen Projektoren, gesteuert werden, um die gleiche oder unterschiedliche Information in Übereinstimmung mit der Ausstrahlungsliste für die Ausstrahlung der jeweiligen Projektoren (22) zu erhalten, **dadurch gekennzeichnet, daß** bestimmt wird, wie oft eine Information innerhalb einer spezifischen Zeitperiode auszustrahlen ist, wobei einzelnen Spots oder Informationsblöcken eine spezifische Informations-Kategorie und eine Ausstrahlungs-Priorität zugewiesen werden, deren Priorität um eine spezifische Prioritätseinheit für jede Ausstrahlung schrittweise verringert wird und die Information entsprechend der zugewiesenen Priorität angezeigt wird, so daß eine Unterbrechung der Ausstrahlung wegen visueller Unzugänglichkeit für Betrachter der Information während der spezifischen Zeitdauer für einen einzelnen Spot oder einen Informations-Block ausgeglichen wird.

2. Verfahren nach Anspruch 1, **dadurch gekennzeichnet, daß** die Ausstrahlungsliste in eine Mehrzahl von Zeitfenstern aufgeteilt wird.

3. Verfahren nach Anspruch 2, **dadurch gekennzeichnet, daß** jedes Zeitfenster einer spezifischen Informations-Kategorie angehört.

4. Verfahren nach einem der Ansprüche 1 bis 3, **dadurch gekennzeichnet, daß** die einer spezifischen Informations-Kategorie zugewiesene Information mit wenigstens einer unterschiedlichen Informations-Kategorie ausgestrahlt wird.

5. Verfahren nach einem der Ansprüche 1 bis 4, **dadurch gekennzeichnet, daß** der spezifischen Informations-Kategorie ein spezifischer Code fiir die Plazierung in der Ausstrahlungsliste zugeordnet wird.

6. Verfahren nach einem der Ansprüche 1 bis 5, **dadurch gekennzeichnet, daß** die Priorität für jeden neuen Informationseingang in das System gleich ist.

7. Verfahren nach einem der Ansprüche 1 bis 6, **dadurch gekennzeichnet, daß** die Priorität schrittweise verringert wird um die Prioritätszahl geteilt durch all die Eingänge eines spezifischen Informations-Spots oder -Blocks, vorzugsweise durch Ganzzahligmachen, wenn die Teilung eine unendliche Dezimalzahl ergibt.

8. Verfahren nach einem der Ansprüche 1 bis 7, **dadurch gekennzeichnet, daß** der einzelne Informations-Spot oder -Block mit der höchsten Prioritätsstufe ausgestrahlt wird, und daß Informations-Spots oder -Blöcke, deren Priorität eine Stufe der Priorität Null erreicht hat, nicht weiter ausgestrahlt werden.

9. Verfahren nach einem der Ansprüche 1 bis 8, **dadurch gekennzeichnet, daß** die Informations-Spots oder -Blöcke in Folge bzw. in einer Sendereihe ausgestrahlt werden, wenn sie die gleiche Priorität haben.

10. Verfahren nach einem der Ansprüche 1 bis 9, **dadurch gekennzeichnet, daß** für die Informations-Spots oder -Blöcke, die eine höhere Priorität als Null und die die gleiche Informations-Kategorie haben, eine vom System ausgewählte Information zwischen jeder Information der gleichen Kategorie abgespielt wird.

11. Anordnung für die Zuordnung einer Informations-Kategorie und einer Ausstrahlungs-Priorität, mit Daten- und Telekommunikations-Schnittstellen (26) zur Rund-um-die-Uhr-Übertragung von Information an Orten, die der breiten Öffentlichkeit zugänglich sind und von ihr frequentiert werden, einschließlich solcher Orte, an denen Televisions-Anlagen angeordnet sind, wobei ein Steuerzentrum (12) Kommunikations-Schnittstellen (14) zur Koordinierung und Steuerung von Projektoren (22) aufweist, wobei das Steuerzentrum (12) in der Lage ist, eine Ausstrahlungsliste in Echtzeit mit Steuerbefehlsfeldern durch dynamisches Buchen von Information von Vermittlern (24) rechtzeitig zur Ausstrahlung zu erzeugen und zu aktualisieren, wobei die Ausstrahlungsliste mit Steuerbefehlen die Projektoren (22) koordiniert und steuert in Bezug auf das, was ausgestrahlt werden soll, wann es ausgestrahlt werden soll, wo es ausgestrahlt werden soll und fiir wie lange es ausgestrahlt werden soll, und jeden Projektor (22) befähigt, unabhängig von den anderen Projektoren gesteuert zu werden, um die gleiche oder unterschiedliche Information in Übereinstimmung mit der Ausstrahlungsliste fiir die Ausstrahlung der jeweiligen Projektoren (22) zu erhalten, **dadurch gekennzeichnet, daß** die Anordnung aufweist:
Mittel, die festlegen, wie oft eine Information während einer spezifischen Zeitdauer auszustrahlen ist, wenn sie gebucht worden ist;
Kategorie-Zuweisungsmittel, wobei einzelnen Spots oder Informations-Blöcken eine spezifische Informations-Kategorie zugewiesen wird;
Mittel zum Zuweisen einer Ausstrahlungspriorität für eine Information;
Berechnungsmittel für die stufenweise Verringerung der Priorität um eine spezifische Einheit der Priorität für jede Ausstrahlung, wodurch sichergestellt wird, daß eine Unterbrechung der Ausstrahlung wegen visueller Unzugänglichkeit für Betrachter der Information während der spezifischen Zeitdauer fiir jeden einzelnen Spot oder Informationsblock ausgeglichen wird.

12. Anordnung nach Anspruch 11, **dadurch gekennzeichnet, daß** die Ausstrahlungsliste in eine Mehrzahl von Zeitferstern aufgeteilt wird.

13. Anordnung nach Anspruch 12, **dadurch gekennzeichnet, daß** jedes Zeitfenster einer spezifischen Informations-Kategorie angehört.

14. Anordnung nach einem der Ansprüche 11 bis 13, **dadurch gekennzeichnet, daß** die einer spezifischen Informations-Kategorie zugewiesene Information mit wenigstens einer unterschiedlichen Informations-Kategorie durch das System ausgestrahlt wird.

15. Anordnung nach einem der Ansprüche 11 bis 14, **dadurch gekennzeichnet, daß** der spezifischen Informations-Kategorie ein spezifischer Code der Plazierung in der Ausstrahlungsliste durch die besagten Kategorie-Zuweisungsmittel zugeordnet wird.

16. Anordnung nach einem der Ansprüche 11 bis 15, **dadurch gekennzeichnet, daß** die Priorität für jeden neuen Informationseingang in das System gleich ist.

17. Anordnung nach einem der Ansprüche 11 bis 16, **dadurch gekennzeichnet, daß** die Priorität durch die Berechnungsmittel schrittweise verringert wird um die Prioritätszahl geteilt durch alle Eingänge eines spezifischen Informations-Spots oder -Blocks, vorzugsweise durch Ganzzahligmachen, wenn die Teilung eine unendliche Dezimalzahl ergibt.

18. Anordnung nach einem der Ansprüche 11 bis 17, **dadurch gekennzeichnet, daß** der einzelne Informations-Spot oder -Block mit der höchsten Prioritätsstufe ausgestrahlt wird und daß Informations-Spots oder -Blöcke, deren Priorität Null erreicht hat, von dem System nicht weiter ausgestrahlt werden.

19. Anordnung nach einem der Ansprüche 11 bis 18, **dadurch gekennzeichnet, daß** die Informations-Spots oder -Blöcke von dem System in Folge bzw. in einer Sendereihe ausgestrahlt werden, wenn sie die gleiche Priorität haben.

20. Anordnung nach einem der Ansprüche 11 bis 19, **dadurch gekennzeichnet, daß** für die Informations-Spots oder -Blöcke, die eine höhere Priorität als Null und die gleiche Informations-Kategorie haben, eine von dem System ausgewählte Information zwischen jeder Information der gleichen Kategorie ausgestrahlt wird.

## Revendications

1. Procédé d'affectation d'une catégorie d'informations et d'une priorité d'exposition pour points ou blocs d'informations dans un système d'information numérique (10) comprenant des interfaces pour données et télécommunication (26) pour transmission d'informations vingt-quatre heures d'affilée en des endroits accessibles à et fréquentés par un large public y compris des endroits où sont placés des téléviseurs, dans lequel un centre de commande (12) a des interfaces de communication (14) pour coordonner et commander des projecteurs (22), dans lequel le centre de commande (12) est apte à créer et mettre à jour une liste d'exposition en temps réel avec des champs d'instructions de commande via un enregistrement dynamique d'informations périodique en vue d'une exposition émanant de médiateurs (24), dans lequel la liste d'exposition comportant des instructions de commande coordonne et donne aux projecteurs (22) les instructions concernant ce qui sera exposé, quand ce sera exposé, où ce sera exposé et combien de temps cela sera exposé, et permet la commande de chaque projecteur (22) indépendamment des autres projecteurs, de façon à ce qu'il reçoive soit les mêmes informations, soit des informations différentes, en fonction de la liste d'exposition régissant leur exposition par les projecteurs (22) respectifs,
**caractérisé en ce que**
l'on détermine combien de fois une information doit être exposée pendant une période de temps déterminée, des points ou blocs d'informations isolés se voyant assigner une catégorie d'informations spécifique et une priorité d'exposition, laquelle priorité va en décroissant par incrément à raison d'une unité spécifique de priorité pour chaque exposition et affiche l'information en fonction de la priorité affectée, de sorte qu'une interruption d'exposition tenant à un manque d'accessibilité visuelle des visualiseurs de l'information est égalisée lors de la période spécifique d'un point ou bloc d'informations isolé.

2. Procédé selon la revendication 1,
l'exposition est divisée en plusieurs secteurs de temps.

3. Procédé selon la revendication 1,
**caractérisé en ce que**
chaque secteur de temps appartient à une catégorie d'informations spécifique.

4. Procédé selon les revendications 1-3,
**caractérisé en ce**
**qu'**une information affectée à une catégorie d'informations spécifique est exposée à au moins une catégorie d'informations différente.

5. Procédé selon les revendications 1-4,
**caractérisé en ce que**
la catégorie d'informations spécifique se voit attribuer un code spécifique de placement dans la liste d'exposition.

6. Procédé selon les revendications 1-5,
**caractérisé en ce que**
cette priorité est égale pour chaque nouvelle entrée d'informations dans le système.

7. Procédé selon les revendications 1-6,
**caractérisé en ce que**
cette priorité est décrémentée du chiffre de priorité divisé par toutes les entrées d'un point ou d'un bloc d'informations de préférence tronqué si la division est un nombre décimal infini.

8. Procédé selon les revendications 1-7,
**caractérisé en ce que**
le point ou bloc d'informations isolé ayant la priorité la plus élevée est exposé, et **en ce que** les points ou blocs d'information dont la priorité a atteint le niveau de priorité zéro ne sont plus exposés.

9. Procédé selon les revendications 1-8,
**caractérisé en ce que**
les points ou blocs d'informations sont exposés en série s'ils ont la même priorité.

10. Procédé selon les revendications 1-9,
**caractérisé en ce que**
les points ou blocs d'informations ayant une priorité supérieure à zéro et la même catégorie d'informations, une information à choix système est affichée entre chacune des informations de la même catégorie.

11. Dispositif pour affectation d'une catégorie d'informations et priorité d'exposition comprenant des interfaces pour données et télécommunication (26) pour transmission d'informations vingt-quatre heures d'affilée en des endroits accessibles à et fréquentés par un large public y compris des endroits où sont placés des téléviseurs, dans lequel un centre de commande (12) a des interfaces de communication (14) pour coordonner et commander des projecteurs (22), dans lequel le centre de commande (12) est apte à créer et mettre à jour une liste d'exposition en temps réel avec des champs d'instructions de commande via un enregistrement dynamique d'informations périodique en vue d'une exposition émanant de médiateurs (24), dans lequel la liste d'exposition comportant des instructions de commande coordonne et donne aux projecteurs (22) les instructions concernant ce qui sera exposé, quand ce sera exposé, où ce sera exposé et combien de temps cela sera exposé, et permet la commande de chaque projecteur (22) indépendamment des autres projecteurs, de façon à ce qu'il reçoive soit les mêmes informations, soit des informations différentes, en fonction de la liste d'exposition régissant leur exposition par les projecteurs (22) respectifs, **caractérisé en ce qu'**il comprend :
des moyens qui déterminent combien de fois une information devra être exposée au cours d'une période spécifique quand elle a été enregistrée ;
des moyens d'affectation à une catégorie, par lesquels des points ou des blocs d'informations isolés sont affectés à une catégorie d'informations spécifiques ;
des moyens pour affecter une priorité d'exposition à une information ;
des moyens de calcul pour décrémenter ladite priorité d'une unité de priorité spécifique de chaque exposition, assurant ainsi qu'une interruption d'exposition due à une inaccessibilité visuelle pour des visualiseurs d'informations est égalisée durant ladite période spécifique de chaque point ou bloc d'informations.

12. Dispositif selon la revendication 11,
**caractérisé en ce que**
la liste d'exposition est divisée en plusieurs secteurs de temps.

13. Dispositif selon la revendication 12,
**caractérisé en ce que**
chaque secteur de temps appartient à une catégorie d'informations spécifique.

14. Dispositif selon les revendications 11-13,
**caractérisé en ce**
**qu'**une information affectée à la catégorie d'informations spécifique est exposée au travers du système à au moins une catégorie d'informations différente.

15. Dispositif selon les revendications 11-14,
**caractérisé en ce que**
la catégorie d'informations spécifique se voit attribuer un code de placement spécifique dans la liste d'exposition par les moyens d'affectation à une catégorie précités.

16. Dispositif selon les revendications 11-15,
**caractérisé en ce que**
la priorité est égale pour chaque nouvelle entrée d'informations dans le système.

17. Dispositif selon les revendications 11-16,
**caractérisé en ce que**
la priorité est décrémentée du chiffre de priorité divisé par toutes les entrées d'un point ou bloc d'informations spécifique, de préférence tronqué par les moyens de calcul si la division est un chiffre décimal infini.

18. Dispositif selon les revendications 11-17,
**caractérisé en ce que**
le point ou bloc d'informations isolé ayant le niveau de priorité le plus élevé est exposé, et que des points ou blocs d'informations dont la priorité a atteint le zéro ne sont pas exposés par le système.

19. Dispositif selon les revendications 11-18,
**caractérisé en ce que**
les points ou blocs d'informations sont exposés en série par le système s'ils ont la même priorité.

20. Dispositif selon les revendications 11-19,
**caractérisé en ce que**
des points ou blocs d'informations ayant une priorité supérieure à zéro et la même catégorie d'informations, une information à choix système est exposée par le système entre chacune des informations de la même catégorie.
